# EUROPÄISCHE PATENTSCHRIFT

(11) **EP 0 645 909 B1**
(45) Veröffentlichungstag und Bekanntmachung des Hinweises auf die Patenterteilung: **04.04.2001**
(21) Anmeldenummer: 94202707.9
(22) Anmeldetag: 21.09.1994
(51) Int. Cl.: H04L 7/00, H04J 3/07

(54) **Übertragungssystem mit einer Anpassungsschaltung**
Transmission system with a matching circuit
Système de transmission avec un circuit d'adaption

(30) Priorität: 25.09.1993 DE 4332761
(43) Veröffentlichungstag der Anmeldung: 29.03.1995
(73) Patentinhaber: LUCENT TECHNOLOGIES INC., Murray Hill, New Jersey 07974-0636 (US)
(72) Erfinder: Niegel, Michael, c/o Philips Patentverw. GmbH., D-20097 Hamburg (DE)
(74) Vertreter: Blumbach, Kramer & Partner GbR

(56) Entgegenhaltungen:
- EP-A- 0 435 383
- EP-A- 0 461 703
- EP-A- 0 507 385
- DE-A- 4 205 959

## Beschreibung

Die Erfindung bezieht sich auf eine Übertragungssystem mit einer Anpassungsschaltung zum Ausgleich von Frequenz-und/oder Phasenschwankungen zwischen einem ankommenden und einem abgehenden rahmensynchronisierten Signal sowie einer derartigen Anpassungsschaltung.

Aus der EP-A 0 507 385 ist ein Übertragungssystem für die synchrone digitale Hierarchie mit wenigstens einer Anpassungsschaltung zum Ausgleich von Phasenschwankungen eines STM-N-Signals bekannt. Bei der Zusammenfassung mehrerer STM-1-Signale zu einem STM-N-Signal tritt das Problem auf, daß auf Grund von Phasenschwankungen oder kleinen Frequenzabweichungen die unterschiedlichen Takte der verschiedenen STM-1-Signale nicht mehr zueinander angepaßt sind. Deshalb muß eine Taktanpassung vorgenommen werden, die durch ein Byte-Stopfverfahren erfolgt. Da jedoch bei einer solchen Taktanpassung mehrere negative Stopfstellen hintereinander vorkommen können, kann der Pufferspeicher, der die STM-1-Signale zwischenspeichert, überlaufen. Das bekannte Übertragungssystem verwendet daher eine Stopfentscheidungsschaltung, die ein Stopfsignal aus der Kombination von Differenzwerten der Adressen des Lese- und Schreibadressengenerators und von tiefpaßgefilterten Werten aus Werten bildet, welche die Stopfinformation der einzuschreibenden Daten eines Containers enthalten. Eine alternative Stopfentscheidungsschaltung bildet tiefpaßgefilterte Differenzwerte aus den Adressen des Lese- und Schreibadressengenerators und ein Stopfsignal aus den tiefpaßgefilterten Differenzwerten. Ferner wird bei dem bekannten Übertragungssystem eine positive Stopfaktion dadurch erreicht, daß die Erzeugung des Lesetaktsignals unterbrochen wird, so daß für einen Takt Daten nicht ausgelesen werden.

Aus der DE-A1-42 05 959 ist eine Anpassungsschaltung bekannt, die durch Anpassung der Daten eines ankommenden STM-1-Signals der synchronen digitalen Hierachie an einen lokal erzeugten Lesetakt ein abgehendes Daten und Datenlücken enthaltenes rahmensynchronisiertes Signal erzeugt und in einem Übertagungssystem verwendet wird. Das STM-1-Signal ist rahmenstrukturiert und weist außer Nutzdaten auch Steuerinformationen und Stopfdaten auf. Ein STM-1-Rahmen besteht aus 270 Spalten und 9 Zeilen (pro Zeile 270 Bytes). In den Zeilen 1 bis 3 und 5 bis 9, jeweils in den Spalten 1 bis 9, ist der "Section Overhead" (SOH) für Steuerungs- und Fehlererkennungsinformationen und in dem restlichen Bereich (AU-Nutzdatenbereich = AU-Payload) Daten des Signals, Stopfdaten und weitere Steuerungsinformationen untergebracht. In dem AU-Nutzdatenbereich können mehrere verschiedene Container (C-4, C-3, C-2, C-12 und C-11) untergebracht sein. Die SOH-Daten werden als Datenlücken bezeichnet.

Aus dem ankommenden STM-1-Signal (DE-A1-42 05 959) wird ein Schreibtaktsignal abgeleitet, das einem Schreibadressengenerator zugeführt wird, der den Schreibvorgang in einen ebenfalls das STM-1-Signal erhaltenden Pufferspeicher steuert. Daten des ankommenden rahmensynchronisierten Signals werden noch einer Synchronisationsschaltung und einem Empfangsrahmenzähler zugeleitet, der den Schreibadressengenerator sperrt, wenn Datenlücken (SOH-Daten) vorliegen. Eine Leseadressengenerator, der ein Lesetaktsignal von einem lokal vorhandenen Taktgenerator erhält und den Lesevorgang aus dem Pufferspeicher steuert, ist ebenso wie der Schreibadressengenerator mit einer Subtraktionsschaltung verbunden. Die Subtraktionsschaltung bildet die Differenz zwischen Schreib- und Leseadresse und liefert eine Folge von Subtraktionswerten an einen Vergleicher. Ist ein Subtraktionswert kleiner als ein Schwellwert, wird der Leseadressengenerator gesperrt. Der Schwellwert entspricht einem unteren Füllstand des Pufferspeichers.

Durch die Sperrung des Leseadressengenerators wird ein positiver Stopfvorgang durchgeführt. Unter einer positiven Stopfung ist das Auslassen einer Nutzinformation an einer solchen Stelle zu verstehen, die sonst eine Nutzinformation aufweist. Positive Stopfvorgänge sind dann erforderlich, wenn die Frequenz des Lesetaktsignals größer ist als die Frequenz des Schreibtaktsignals. Negative Stopfvorgänge ergeben sich, wenn die Frequenz des Lesetaktsignals kleiner ist als die Frequenz des Schreibtaktsignals. Bei einer negativen Stopfung wird an einer solchen Stelle Nutzinformation übertragen, die sonst keine Nutzinformation trägt. Eine negative Stopfaktion kann bei der bekannten Schaltung nur während einer Datenlücke durchgeführt werden. Eine Stelle, die ein SOH-Datenbyte aufweist, wird also mit einem Nutzdatenbyte belegt.

Die Anpassungsschaltung nach der DE-A1-42 05 959 kann nur dann in einem Übertragungssystem der synchronen digitalen Hierachie verwendet werden, wenn die SOH-Daten nicht weitergeleitet werden.

Der Erfindung liegt also die Aufgabe zugrunde, ein Übertagungssystem mit einer Anpassungsschaltung der eingangs genannten Art zu schaffen, bei dem Frequenz- und/oder Phasenschwankungen zwischen einem ankommenden und abgehenden rahmensynchronisierten Signal ausgeglichen werden können, wenn im wesentlichen alle Daten weitergeleitet werden sollen.

Die Erfindung wird bei einem Übertragungssystem mit einer Anpassungsschaltung zum Ausgleich von Frequenz- und/oder Phasenschwankungen zwischen einem ankommenden und einem abgehenden rahmensynchronisierten Signal durch folgende Merkmale gelöst:
Die Anpassungsschaltung enthält
- einen Pufferspeicher zur Zwischenspeicherung der Daten des Signals,
- einen zyklische Schreibadressen erzeugenden Schreibadressengenerator zur Steuerung des Schreibvorgangs in den Pufferspeicher,
- einen zyklische Leseadressen erzeugenden Leseadressengenerator zur Steuerung des Lesevorgangs aus dem Pufferspeicher, der während eines vorgegebenen Bereichs jedes Rahmens des abgehenden Signals bei Angabe einer positiven Stopfaktion durch ein Steuersignal wenigstens zur doppelten Erzeugung einer Leseadresse und bei Angabe einer negativen Stopfaktion durch das Steuersignal zum Überspringen wenigstens einer Leseadresse vorgesehen ist, und
   mit einem Phasendetektor zur Bildung der Differenz aus einer Schreib- und Leseadresse und zur Erzeugung wenigstens eines Phasenwertes während jedes Rahmens und
   mit einer Stopfentscheidungsschaltung, die zur Erzeugung des Steuersignals aus dem Phasenwert vorgesehen ist.

Weiter enthält das Übertragungssystem einen Phasendetektor jeweils zur Bildung eines Phasenwertes aus einer Leseadresse und einer Schreibadresse. Die Stopfentscheidungsschaltung ist während jedes Rahmens des abgehenden Signals mindestens einmal zur Erzeugung des Steuersignals vorgesehen, das bei Unterschreitung eines Phasenwertes unter einen ersten Schwellwert eine negative Stopfaktion und das bei Überschreitung des Phasenwertes über einen zweiten Schwellwert, der größer als der erste Schwellwert ist, eine positive Stopfaktion angibt.

Bei der Anpassungsschaltung des erfindungsgemäßen Übertragungssystems wird im Gegensatz zur bekannten Anpassungsschaltung nur der Leseadressengenerator gesteuert. Mittels des Schreibadressengenerators, der ein aus dem ankommenden rahmensynchronisierten Signal abgeleitetes Schreibtaktsignal erhält und der Schreibadressen erzeugt, wird der Einschreibvorgang der Daten in den Pufferspeicher durchgeführt. Der Leseadressengenerator erhält ein Lesetaktsignal beispielsweise von einem im Übertragungssystem angeordneten Taktgenerator. Der Auslesevorgang der Daten aus dem Pufferspeicher wird von dem Leseadressengenerator gesteuert, der Leseadressen erzeugt. Der Phasendetektor bildet jeweils die Differenz aus einer Schreib- und Leseadresse und erzeugt eine Folge von Phasenwerten.

Während jedes Rahmens des abgehenden Signals wird wenigstens einmal ein Phasenwert mit einem ersten und zweiten Schwellwert verglichen. Der erste Schwellwert, der einem unteren Füllstand des Pufferspeichers entspricht, ist kleiner als der zweite Schwellwert, der einem oberen Füllstand des Pufferspeichers entspricht. Unterschreitet der Phasenwert den ersten Schwellwert wird für den Leseadressengenerator ein Steuersignal mit einer negativen Stopfinformation erzeugt. Wird der zweite Schwellwert überschritten, so wird das Steuersignal eine positive Stopfaktion angeben. Ist weder der erste Schwellwert unterschritten noch der zweite Schwellwert überschritten gibt das Steuersignal an, daß keine Stopfaktion vorgenommen werden soll.

Das Steuersignal wird dem Leseadressengenerator zugeführt, der bei Angabe einer negativen Stopfaktion mindestens eine Leseadresse während eines vorgegebenen Bereichs des Rahmens überspringt und bei Angabe einer positiven Stopfaktion eine Leseadresse mindestens noch einmal ausgibt. Bei einer negativen Stopfaktion wird also mindestens eine Leseadresse ausgelassen, wodurch eine in den Pufferspeicher eingeschriebene Dateninformation nicht weitergegeben wird. Der vorgegebene Bereich sollte so gewählt werden, daß bei einer negativen Stopfaktion keine bedeutsame (z.B. Leerstelle) Information verloren geht oder eine Auswertung der Information dieses Bereiches schon stattgefunden hat. Bei einer positiven Stopfaktion wird eine Leseadresse zumindest doppelt erzeugt, wodurch sich eine zusätzliche Datenstelle im Signal ergibt.

Daß ein Stopfvorgang vorgenommen worden ist, kann einer der Anpassungsschaltung nachgeordneten Vorrichtung über eine zusätzliche Verbindung mitgeteilt werden. Als Stopfinformation könnte das Steuersignal weitergegeben werden.

Wenn die Stopfentscheidungsschaltung einen Quantisierer enthält, ist dieser bei jedem Rahmen einmal zum Vergleich des Phasenwertes mit dem ersten oder zweiten Schwellwert vorgesehen.

Damit der Leseadressengenerator nur während des vorgegebenen Bereichs des Rahmens des abgehenden Signals bei einer positiven Stopfaktion wenigstens noch einmal die zuletzt erzeugte Leseadresse erzeugt und bei einer negativen Stopfaktion wenigstens eine Leseadresse überspringt, muß der vorgegebene Bereich im abgehenden Signal jeweils erkannt werden. Hierzu dient eine Rahmenauswerteschaltung, die zum Empfang des abgehenden rahmensynchronisierten Signals und zur Detektierung des vorgegebenen Bereichs vorgesehen ist. Eine solche Rahmenauswerteschaltung arbeiten beispielsweise nach dem selben Prinzip wie der aus der DE-A1-42 05 959 bekannte Empfangs-Rahmenzähler.

Damit der Quantisierer der Stopfentscheidungsschaltung nur einmal während eines Rahmens das aus einem Vergleich seiner beiden Schwellwerte mit einem Phasenwert resultierende Steuersignal erzeugt, ist die Rahmenauswerteschaltung jeweils während des vorgegebenen Bereichs eines Rahmens zur Erzeugung eines Freigabeimpulses für den Quantisierer vorgesehen. Der Quantisierer bildet während des Auftretens des Freigabeimpulses dann das Steuersignal.

Die Stopfinformation kann, wie oben erwähnt, zu einer nachgeordneten Vorrichtung über eine weitere Verbindung gegeben werden. Es ist auch möglich die Stopfinformation in dem abgehenden rahmensynchronisierten Signal an einer nicht für Informationen verwendeten Stelle unterzubringen. Eine solche Einblendung der Stopfinformation in das abgehende rahmensynchronisierte Signal läßt sich mit folgenden Maßnahmen verwirklichen:
Ein Multiplexer ist zum Empfang des abgehenden rahmensynchronisierten Signals und einer von einem Codierer gelieferten Folge von Codeworten, der Codierer zur Erzeugung einer Folge von Codeworten aus dem Steuersignal, das jeweils eine positive oder eine negative oder keine Stopfaktion angibt, und die Rahmenauswerteschaltung zur Erzeugung eines Umschaltimpulses vorgesehen, welches während des Anliegens eines vorgegebenen Bytes eines Rahmens an einem Eingang des Multiplexers die Weiterleitung eines Codewortes an den Ausgang des Multiplexers bewirkt.

Im Phasendetektor ist ein Subtrahierer enthalten, der zum Empfang von Lese- und Schreibadressen und zur Bildung einer Folge von Phasenwerten vorgesehen ist. Die Erzeugung der Schreibadressen durch den Schreibadressengenerator ist an den Schreibtakt und die Erzeugung der Leseadressen durch den Leseadressengenerator an den Lesetakt gekoppelt. In der Regel wird die Schreibadresse vor der Subtraktion mit dem Lesetakt synchronisiert, d.h. die gebildete Schreibadresse in ein mit dem Lesetakt getaktetes Register eingeschrieben. Ist genau zu dem Einschreibzeitpunkt ein Wechsel der Schreibadresse erfolgt, so kann die Schreibadresse häufig nicht korrekt eingelesen werden. Hat sich beispielsweise zum Einschreibzeitpunkt ein erste Bitstelle der Schreibadresse schon verändert, eine zweite Bitstelle der Schreibadresse aber noch nicht, so ergibt sich eine falsche Schreibadresse. Damit dieser Fehler minimiert wird, sind der Schreib- und Leseadressengenerator zur Bildung von nach einen einschrittigen Code codierten Schreib- und Leseadressen vorgesehen. Ein solcher Code ist beispielsweise der Gray-Code.

Wenn das rahmensynchronisierte Signal ein STM-1-Signal der synchronen digitalen Hierachie ist, kann der vorgegebene Bereich das erste Byte (1. Spalte) in der 5. Reihe des STM-1-Rahmens ist. Dieses und die folgenden zwei Bytes enthalten Informationen, die schon vorher ausgewertet worden sind.

Die Erfindung bezieht sich auch auf eine Anpassungsschaltung zum Ausgleich von Frequenz- und/oder Phasenschwankungen zwischen einem ankommenden und einem abgehenden rahmensynchronisierten Signal. Diese enthält.
- einen Pufferspeicher zur Zwischenspeicherung der Daten des Signals,
- einen zyklische Schreibadressen erzeugenden Schreibadressengenerator zur Steuerung des Schreibvorgangs in den Pufferspeicher,
- einen zyklischen Leseadressen erzeugenden Leseadressengenerator zur Steuerung des Lesevorgangs aus dem Pufferspeicher, der während eines vorgegebenen Bereichs jedes Rahmens des abgehenden Signals bei Angabe einer positiven Stopfaktion durch ein Steuersignal wenigstens zur doppelten Erzeugung einer Leseadresse und bei Angabe einer negativen Stopfaktion durch das Steuersignal zum Überspringen wenigstens einer Leseadresse vorgesehen ist, mit einem Phasendetektor zur Bildung der Differenz aus einer Schreib- und Leseadresse und zur Erzeugung wenigstens eines Phasenwertes während jedes Rahmens, und
- mit einer Stopfentscheidungsschaltung, die zur Erzeugung des Steuersignals aus dem Phasenwert vorgesehen ist.

Ein Ausführungsbeispiel der Erfindung wird im folgenden anhand der Figuren näher erläutert: Es zeigen
- Fig. 1: ein Blockschaltbild eines Übertragungssystems der synchronen digitalen Hierarchie,
- Fig. 2: einen im Übertragungssystem nach Fig. 1 zu verarbeitenden, schematisch dargestellten STM-1-Rahmen,
- Fig. 3: eine in dem Übertragungssystem nach Fig. 1 verwendete Anpassungsschaltung und
- Fig. 4: schematisch skizzierte Signalausschnitte, die in der Anpassungsschatlung nach Fig. 3 auftreten.

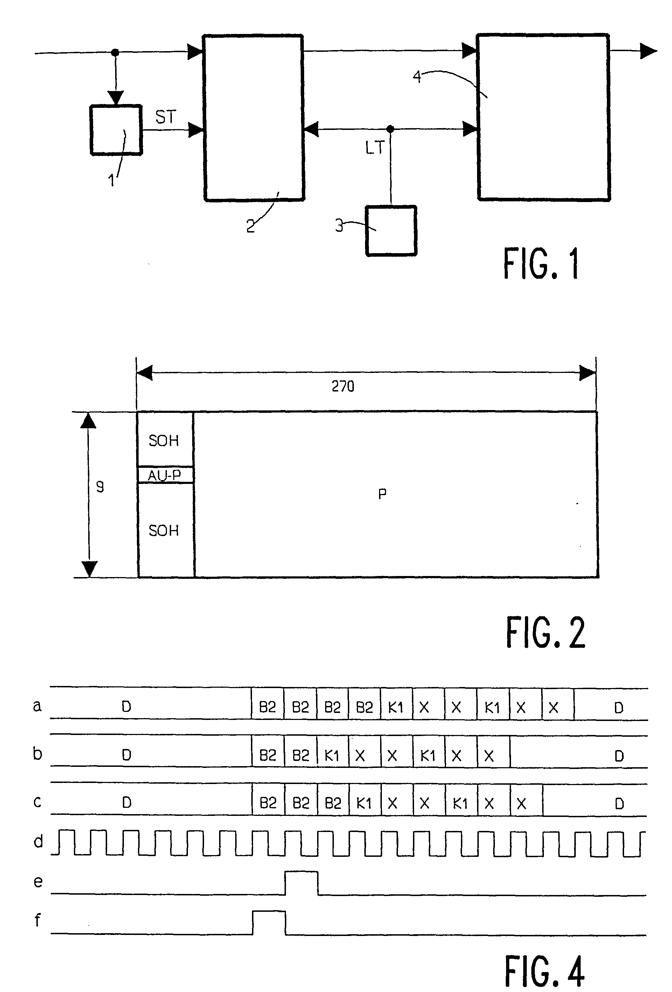

Das in Fig. 1 dargestellte Blockschaltbild eines Übertragungssystems der digitalen synchronen Hierarchie enthält eine Takterzeugungsschaltung 1, eine Anpassungsschaltung 2, einen Taktgenerator 3 und eine Vorrichtung 4 zum Weiterverarbeiten des von der Anpassungsschaltung 2 gelieferten Signals. Das ankommende rahmensynchronisierte Signal kann z. B. ein STM-1-Signal der digitalen synchronen Hierarchie sein. Das STM-1-Signal ist rahmenstrukturiert und in der CCITT-Empfehlung G 709 näher erläutert. Ein STM-1-Rahmen ist in der Fig. 2 schematisch gezeigt. Der Rahmen besteht aus 270 Spalten und 9 Zeilen (pro Zeile 270 Bytes). In den Zeilen 1 bis 3 und 5 bis 9, jeweils in den Spalten 1 bis 9 sind beispielsweise Steuerungs- und Fehlererkennungsinformationen enthalten. Dieser Bereich wird als "Section Overhead" (SOH) bezeichnet. In der vierten Zeile von Spalte 1 bis 9 ist eine weitere Steuerungsinformation, die als "AU-Pointer" (AU-P) bezeichnet wird, eingefügt. In den restlichen Spalten und Zeilen ist die Nutzinformation, die als STM-1-Payload (P) bezeichnet wird, untergebracht.

In der Takterzeugungsschaltung 1 (Fig. 1) wird aus dem STM-1-Signal ein Schreibtaktsignal ST abgeleitet. Das Schreibtaktsignal ST wird ebenso wie das STM-1-Signal der Anpassungsschaltung 2 zugeführt, die noch ein Lesetaktsignal LT von dem Taktgenerator 3 erhält. In der Anpassungsschaltung 2 findet eine Anpassung der ankommenden Daten des STM-1-Signals an das Lesetaktsignal LT statt. Es werden also Frequenz- und/oder Phasenschwankungen zwischen dem ankommenden und dem abgehenden STM-1-Signal ausgeglichen. Bei diesem Anpassungs- oder Ausgleichsvorgang finden Stopfaktionen statt, wodurch gegebenenfalls im abgehenden STM-1-Signal ein zusätzliches Byte eingefügt oder ein Byte gelöscht wird. Das der Vorrichtung 4 zugeführte abgehende Signal führt beispielsweise eine Auswertung der SOH-Daten, eine Auflösung des STM-1-Signals in verschiedene untergeordnete, in dem STM-1-Signal transportierte Signale oder fügt die Stopfinformationen in dafür vorgesehene (nach CCITT-Empfehlung G 709) Stellen eines Rahmens ein. Die Vorrichtung 4 benötigt hierbei nur noch das Lesetaktsignal LT von dem Taktgenerator 3.

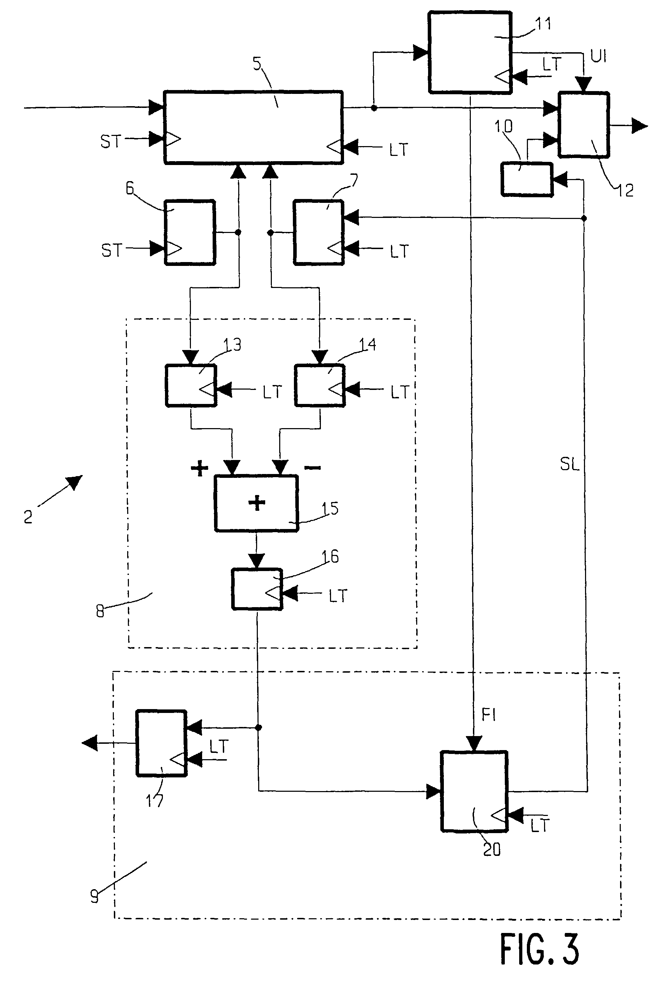

Die in Fig. 3 detaillierter dargestellte Anpassungsschaltung 2 enthält einen Pufferspeicher 5, einen Schreibadressengenerator 6, einen Leseadressengenerator 7, einen Phasendetektor 8, eine Stopfentscheidungsschaltung 9, einen Codierer 10, eine Rahmenauswerteschaltung 11 und einen Multiplexer 12. Der Schreibadressengenerator 6, der beispielsweise als modulo-4-Zähler ausgebildet ist, erhält das Schreibtaktsignal ST und erzeugt mit jedem Takt eine Schreibadresse. Die nach dem einschrittigen Gray-Code erzeugten Schreibadressen wiederholen sich zyklisch. Die Schreibadressen werden dem Pufferspeicher 5 und einem Register 13, welches das Lesetaktsignal LT erhält und im Phasendetektor 8 enthalten ist, zugeleitet. Der Pufferspeicher 5 bekommt noch das Schreibtaktsignal ST für den Schreibvorgang und das Lesetaktsignal LT für den Auslesevorgang. Zur Durchführung des Auslesevorgangs liefert der Leseadressengenerator 7, der auch als modulo-4-Zähler ausgebildet sein kann und das Lesetaktsignal LT erhält, dem Pufferspeicher 5 noch Leseadressen. Der Leseadressengenerator 7 bekommt noch von der Stopfentscheidungsschaltung 9 ein Steuersignal SL zugeführt. Wenn das Steuersignal SL eine positive Stopfaktion angibt, wird die zuletzt erzeugte Leseadresse nochmals ausgegeben. Bei Angabe einer negativen Stopfaktion im Steuersignal SL wird die eigentlich folgende Leseadresse übersprungen.

Die Folge der Leseadressen wird außer dem Pufferspeicher 5 auch einem weiteren, das Lesetaktsignal LT erhaltenen Register 14 zugeführt, welches auch Bestandteil des Phasendetektors 8 ist. Die in dem Register 13 zwischengespeicherte Schreibadresse wird einem ersten Eingang eines im Phasendetektor 8 enthaltenen Subtrahierers 15 zugeführt. Dem zweiten Eingang des Subtrahieres 15 wird die im Register 14 zwischengespeicherte Leseadresse zugeleitet. Der Subtrahierer 15 subtrahiert die Leseadresse von der Schreibadresse und bildet einen Phasenwert, der in einem nachfolgenden Register 16 zwischengespeichert wird. Das Register 16 ist ein Schaltungsbestandteil des Phasendetektors 8 und bekommt das Lesetaktsignal LT geliefert.

Das Register 13 dient zur Synchronisierung der Schreibadresse mit dem Lesetakt. Wenn genau zum Einschreibzeitpunkt in das Register 13 ein Wechsel der Schreibadresse erfolgt, so kann die Schreibadresse häufig nicht korrekt eingelesen werden. Hat sich beispielsweise zum Einschreibzeitpunkt ein erste Bitstelle der Schreibadresse schon verändert, eine zweite Bitstelle der Schreibadresse aber noch nicht, so ergibt sich eine falsche Schreibadresse. Damit dieser Fehler minimiert wird, erzeugen der Schreibund Leseadressengenerator 6 und 7 Schreib- und Leseadressen nach dem einschrittigen Gray-Code. Beim Gray-Code verändern sich zwei aufeinanderfolgende Adressen nur an einer Bitstelle.

Der Ausgang des Registers 16, der auch der Ausgang des Phasendetektors 8 ist, ist mit dem Eingang der Stopfentscheidungsschaltung 9 verbunden. Diese enthält eine Fehlerauswerteschaltung 17 und einen Quantisierer 20. Einen. vom Register 16 gelieferten Phasenwert empfangen die hier nicht näher beschriebene Fehlerauswerteschaltung 17 und der Quantisierer 20, der das Steuersignal SL bildet und der außer dem Lesetaktsignal LT zu einem bestimmten Zeitpunkt einen Freigabeimpuls FI erhält. Ein Ausführungsbeispiel für eine Fehlerauswerteschaltung 17 ist in der DE-A1-42 05 959 aufgeführt. Die Fehlerauswerteschaltung 17 erhält noch das Lesetaktsignal LT und gibt an ob der Pufferspeicher 5 unter- oder übergelaufen ist.

Wenn der Freigabeimpuls FI vorliegt vergleicht, wird die Stopfentscheidung getroffen. Der Quantisierer 20 vergleicht den vom Register 16 gelieferten Phasenwert mit einem ersten und zweiten Schwellwert. Der erste Schwellwert entspricht einem unteren Füllstand des Pufferspeichers 5 und der zweite Schwellwert einem oberen Füllstand des Pufferspeichers 5. Unterschreitet der vom Register 16 gelieferte Phasenwert den ersten Schwellwert muß negativ gestopft werden und das vom Quantisierer erzeugte Steuersignal SL enthält eine Angabe über eine negative Stopfaktion. Überschreitet der vom Register 16 gelieferte Phasenwert den zweiten Schwellwert wird das Steuersignal SL vom Quantisierer 20 mit einer positiven Stopfaktion ausgegeben.

Negativ muß gestopft werden, wenn die Frequenz des Lesetaktsignals LT kleiner als die Frequenz des Schreibtaktsignals ST ist. Wenn die Frequenz des Lesetaktsignals LT größer als die Frequenz des Schreibtaktsignals ist muß positiv gestopft werden. Bei einem negativen Stopfvorgang wird der Rahmen des abgehenden STM-1-Signals an einer vorbestimmten Stelle um ein Byte gekürzt und bei einem positiven Stopfvorgang an einer bestimmten Stelle im Rahmen des abgehenden Signals verlängert. Dies wird mittels des Leseadressengenerators 7 erreicht, der bei einer Veränderung des Steuersignals SL entweder eine Leseadresse doppelt ausgibt oder eine Leseadresse überspringt.

Anhand in der Fig. 4 dargestellten Signalausschnitte kann diese Verkürzung des STM-1-Signals gezeigt werden. Die Signalausschnitte a bis c geben Bytes des STM-1-Rahmens an. Das erste Byte in der 5. Zeile (1.Spalte) des STM-1-Rahmens ist das erste B2-Byte. Wenn kein Stopfvorgang durchgeführt wird, folgen zwei weitere B2-Bytes, ein K1-Byte, zwei X-Bytes, ein weiteres Kl-Byte und zwei weitere X-Bytes (vgl. Signalausschnitt c in Fig. 4). Die B2-Bytes im STM-1-Rahmen enthalten eine Information, die vorher schon ausgewertet worden ist. Bei einem positiven Stopfvorgang (vgl. Signalausschnitt a in Fig. 4) wird ein weiteres B2-Byte vor dem ersten K1-Byte erzeugt. Das dritte B2-Byte wird dabei nochmals ausgelesen. Bei einem negativen Stopfvorgang wird das dritte B2-Byte ausgelassen (vgl. Signalausschnitt b in Fig. 4). Eine Leseadresse wird dabei übersprungen.

Ferner ist in der Fig. 4 noch ein Ausschnitt d des Lesetaktsignals LT und ein Ausschnitt f mit dem Freigabeimpuls FI dargestellt.

Den Freigabeimpuls FI für den Quantisierer 20 erzeugt die Rahmenauswerteschaltung 11, die das Lesetaktsignal LT und der den vom Pufferspeicher 5 abgegebenen Datenstrom erhält. Eine solche Rahmenauswerteschaltung 11 erkennt den Rahmenbeginn eines STM-1-Signals und zählt die Bytes des STM-1-Rahmens. Erreicht ein in der Rahmenauswerteschaltung 11 enthaltener Zähler einen Zählerstand, der dem Anfang des vorgegebenen Bereichs (erstes Byte der 5. Zeile des STM-1-Rahmens oder erstes B2-Byte) entspricht, erzeugt die Rahmenauswerteschaltung 11 den Freigabeimpuls. Während des Auftretens des zweiten B2-Bytes (zweites Byte in der 5. Zeile des STM-1-Rahmens) wird von der Rahmenauswerteschaltung 11 ein Umschaltsignal UI (vgl. Signalausschnitt e in Fig. 4) für den Multiplexer 12 erzeugt.

Der erste Eingang des Multiplexers 12 ist mit dem Ausgang des Pufferspeichers 5 verbunden und dessen zweiter Eingang mit dem Codierer 10, der das Steuersignal SL empfängt. Nur während des Vorliegens des Umschaltsignals UI ist der zweite Eingang des Multiplexers 12 mit seinem Ausgang verbunden. Sonst ist der erste Eingang des Multiplexers 12 mit seinem Ausgang gekoppelt. Der Codierer 10 liefert ein Codewort, das angibt, ob eine positive, eine negative oder keine Stopfaktion vorliegt. Dieses Codewort wird als zweites B2-Byte in das abgehende STM-1-Signal mittels des Multiplexers 12 und der Rahmenauswerteschaltung 11 eingeblendet.

## Patentansprüche

1. Übertragungssystem mit einer Anpassungsschaltung (2) zum Ausgleich von Frequenz- und /oder Phasenschwankungen zwischen einem ankommenden und einem abgehenden rahmensynchronisierten Signal, gekennzeichnet durch
- einen Pufferspeicher (5) zur Zwischenspeicherung der Daten des Signals,
- einen zyklische Schreibadressen erzeugenden Schreibadressengenerator (6) zur Steuerung des Schreibvorgangs in den Pufferspeicher (5),
- einen zyklische Leseadressen erzeugenden Leseadressengenerator (7) zur Steuerung des Lesevorgangs aus dem Pufferspeicher (5), der während eines vorgegebenen Bereichs jedes Rahmens des abgehenden Signals bei Angabe einer positiven Stopfaktion durch ein Steuersignal wenigstens zur doppelten Erzeugung einer Leseadresse und bei Angabe einer negativen Stopfaktion durch das Steuersignal zum Überspringen wenigstens einer Leseadresse vorgesehen ist,
- einen Phasendetektor (8) zur Bildung der Differenz aus einer Schreib- und Leseadresse und zur Erzeugung wenigstens eines Phasenwertes während jedes Rahmens, und
- eine Stopfentscheidungsschaltung (9), die zur Erzeugung des Steuersignals aus dem Phasenwert vorgesehen ist.

2. Übertragungssystem nach Anspruch 1,
dadurch gekennzeichnet,
daß die Stopfentscheidungsschaltung (9) während jedes Rahmens des abgehenden Signals mindestens einmal zur Erzeugung des Steuersignals vorgesehen ist, das bei Unterschreitung eines Phasenwertes unter einen ersten Schwellenewert eine negative Stopfaktion und das bei Überschreitung eines Phasenwertes über einen zweiten Schwellenwert, der größer als der erste Schwellenwert ist, eine positive Stopfaktion angibt.

3. Übertragungssystem nach Anspruch 2,
dadurch gekennzeichnet,
daß die Stopfentscheidungsschaltung (9) einen Quantisierer (20) enthält, der bei jedem Rahmen einmal zum Vergleich des Phasenwertes mit dem ersten oder zweiten Schwellwert vorgesehen ist.

4. Übertagungssystem nach Anspruch 2 oder 3,
dadurch gekennzeichnet,
daß eine Rahmenauswerteschaltung (11) zum Empfang des abgehenden synchronisierten Signals und zur Detektierung des vorgegebenen Bereichs vorgesehen ist.

5. Übertragungssystem nach Anspruch 4,
dadurch gekennzeichnet,
daß die Rahmenauswerteschaltung (11) jeweils während des vorgegebenen Bereichs eines Rahmens zur Erzeugung eines Freigabeimpulses für den Quantisierer (20) vorgesehen ist und
daß der Quantisierer (20) während des Auftretens des Freigabeimpulses zur Bildung des Steuersignals vorgesehen ist.

6. Übertragungssystem nach Anspruch 4 oder 5,
dadurch gekennzeichnet,
daß ein Multiplexer (12) zum Empfang des abgehenden rahmensynchronisierten Signals und einer von einem Codierer (10) gelieferten Folge von Codeworten vorgesehen ist,
daß der Codierer (10) zur Erzeugung einer Folge von Codeworten aus dem Steuersignal vorgesehen ist, das jeweils eine positive oder eine negative oder keine Stopfaktion angibt, und
daß die Rahmenauswerteschaltung (11) zur Erzeugung eines Umschaltimpulses vorgesehen ist, welches während des Anliegens eines vorgegebenen Bytes eines Rahmens an einem Eingang des Multiplexers (12) die Weiterleitung eines Codewortes an den Ausgang des Multiplexers (12) bewirkt.

7. Übertragungssystem nach einem der Ansprüche 1 bis 6,
dadurch gekennzeichnet,
daß der Schreib- und Leseadressengenerator (6, 7) zur Bildung von nach einen einschrittigen Code codierten Schreib- und Leseadressen vorgesehen sind und
daß der Phasendetektor (8) einen Subtrahierer (15) enthält, der zum Empfang von Lese- und Schreibadressen und zur Bildung einer Folge von Phasenwerten vorgesehen ist.

8. Übertragungssystem nach einem der Ansprüche 1 bis 6,
dadurch gekennzeichnet,
daß das rahmensynchronisierte Signal ein STM-1-Signal der synchronen digitalen Hierachie ist und
daß der vorgegebene Bereich das erste Byte (1. Spalte) in der 5. Reihe des STM-1-Rahmens ist.

9. Anpassungschaltung (2) zum Ausgleich von Frequenzund/oder Phasenschwankungen zwischen einem ankommenden und einem abgehenden rahmensynchronisierten Signal, gekennzeichnet durch
- einen Pufferspeicher (5) zur Zwischenspeicherung der Daten des Signals,
- einen zyklische Schreibadressen erzeugenden Schreibadressengenerator (6) zur Steuerung des Schreibvorgangs in den Pufferspeicher (5),
- einen zyklische Leseadressen erzeugenden Leseadressengenerator (7) zur Steuerung des Lesevorgangs aus dem Pufferspeicher (5), der während eines vorgegebenen Bereichs jedes Rahmens des abgehenden Signals bei Angabe einer positiven Stopfaktion durch ein Steuersignal wenigstens zur doppelten Erzeugung einer Leseadresse und bei Angabe einer negativen Stopfaktion durch das Steuersignal zum Überspringen wenigstens einer Leseadresse vorgesehen ist,
- einen Phasendetektor (8) zur Bildung der Differenz aus einer Schreib- und Leseadresse und zur Erzeugung wenigstens eines Phasenwertes während jedes Rahmens, und
- eine Stopfentscheidungsschaltung (9), die zur Erzeugung des Steuersignals aus dem Phasenwert vorgesehen ist.

## Claims

1. A transmission system comprising a matching circuit (2) for compensating fluctuations in frequency and/or phase between an incoming and an outgoing frame-synchronised signal, characterised by
- a buffer memory (5) for temporary storage of the signal data,
- a cyclic write-address generator (6) generating write addresses for controlling the writing operation in the buffer memory (5),
- a cyclic read-address generator (7) which generates read addresses for controlling the operation of reading out of the buffer memory (5) and which, during a preset region of each frame of the outgoing signal, on indication of a positive filling action by a control signal, is adapted to generate a read address at least twice and, on indication of a negative filling action by the control signal, is adapted to skip at least one read address,
- a phase detector (8) for forming the difference between a write address and a read address and for generating at least one phase value during each frame and
- a filling decision circuit (9) adapted to generate the control signal from the phase value.

2. A transmission system according to claim 1, characterised in that the filling decision circuit (9), during each frame of the outgoing signal, is adapted at least once to generate the control signal, which indicates a negative filling action if a phase value falls below a first threshold value and indicates a positive filling action if a phase value exceeds a second threshold value which is greater than the first threshold value.

3. A transmission system according to claim 2, characterised in that the filling decision circuit (9) contains a quantiser (20) adapted to compare the phase value with the first or second threshold value once in each frame.

4. A transmission system according to claim 2 or 3, characterised in that a frame evaluating circuit (11) is provided for receiving the outgoing synchronised signal and for detecting the preset region.

5. A transmission system according to claim 4, characterised in that during each preset region of a frame, the frame evaluating circuit (11) is adapted to generate a release pulse for the quantiser (20), and in that the quantiser (20) is adapted to form the control signal during the occurrence of the release pulse.

6. A transmission system according to claim 4 or 5, characterised in that a multiplexer (12) is provided for receiving the outgoing frame-synchronised signal and a sequence of code words delivered by a coder (10), in that the coder (10) is adapted to generate a sequence of code words from the control signal indicating a positive or a negative or no filling action, and in that the frame evaluating circuit (11) is adapted to generate a change-over pulse which transmits a code word to the output of the multiplexer (12) during the arrival of a preset byte of a frame at an input of the said multiplexer (12).

7. A transmission system according to any of claims 1 to 6, characterised in that the write address generator (6) and the read address generator (7) are adapted to form write and read addresses coded in accordance with a one-step code and in that the phase detector (8) contains a subtractor (15) adapted to receive read and write addresses and to form a sequence of phase values.

8. A transmission system according to any of claims 1 to 6, characterised in that the frame-synchronised signal is an STM-1 signal of the synchronous digital hierarchy and in that the preset region is the first byte (first column) in the fifth row of the STM-1 frame.

9. A matching circuit (2) for compensating fluctuations in frequency and/or phase between an incoming and an outgoing frame-synchronised signal, characterised by
- a buffer memory (5) for temporary storage of the signal data,
- a cyclic write-address generator (6) generating write addresses for controlling the writing operation in the buffer memory (5),
- a cyclic read-address generator (7) which generates read addresses for controlling the operation of reading out of the buffer memory (5) and which, during a preset region of each frame of the outgoing signal, on indication of a positive filling action by a control signal, is adapted to generate a read address at least twice and, on indication of a negative filling action by the control signal, is adapted to skip at least one read address,
- a phase detector (8) for forming the difference between a write address and a read address and for generating at least one phase value during each frame and
- a filling decision circuit (9) adapted to generate the control signal from the phase value.

## Revendications

1. Système de transmission comportant un circuit d'adaptation (2) pour compenser des variations de fréquence et/ou de phase entre un signal à synchronisation de trames arrivant et un signal à synchronisation de trames partant, caractérisé par
- une mémoire tampon (5) pour mémorisation intermédiaire des données du signal,
- un générateur d'adresses d'écriture (6) produisant des adresses d'écriture cycliques pour commander l'opération d'écriture dans la mémoire tampon (5),
- un générateur d'adresses de lecture (7) qui produit des adresses de lecture cycliques pour commander l'opération de lecture dans la mémoire tampon (5) et qui est prévu, pendant une zone prédéterminée de chaque trame du signal partant, pour la production au moins doublée d'une adresse de lecture lorsqu'un signal de commande indique une action de justification positive et pour le saut d'au moins une adresse de lecture lorsque le signal de commande indique une action de justification négative,
- un détecteur de phase (8) pour former la différence à partir d'une adresse d'écriture et d'une adresse de lecture et pour produire au moins une valeur de phase pendant chaque trame, et
- un circuit de décision de justification (9) qui est prévu pour produire le signal de commande à partir de la valeur de phase.

2. Système de transmission selon la revendication 1, caractérisé en ce que le circuit de décision de justification (9) est prévu, pendant chaque trame du signal partant, au moins une fois pour la production du signal de commande qui indique une action de justification négative si une valeur de phase est inférieure à une première valeur de seuil et qui indique une action de justification positive si une valeur de phase est supérieure à une deuxième valeur de seuil qui est plus grande que la première valeur de seuil.

3. Système de transmission selon la revendication 2, caractérisé en ce que le circuit de décision de justification (9) contient un dispositif de quantification (20) qui est prévu, une fois pour chaque trame, pour la comparaison de la valeur de phase à la première ou à la deuxième valeur de seuil.

4. Système de transmission selon la revendication 2 ou 3, caractérisé en ce qu'un circuit d'évaluation de trame (11) est prévu pour la réception du signal synchronisé partant et pour la détection de la zone prédéterminée.

5. Système de transmission selon la revendication 4, caractérisé en ce que
le circuit d'évaluation de trame (11) est prévu, à chaque fois pendant la zone prédéterminée d'une trame, pour la production d'une impulsion d'autorisation destinée au dispositif de quantification (20), et
le dispositif de quantification (20) est prévu, en présence de l'impulsion d'autorisation, pour la formation du signal de commande.

6. Système de transmission selon la revendication 4 ou 5, caractérisé en ce que
un multiplexeur (12) est prévu pour la réception du signal à synchronisation de trames partant et d'une séquence de mots codes fournie par un codeur (10),
le codeur (10) est prévu pour produire une séquence de mots codes à partir du signal de commande qui indique respectivement une action de justification positive ou une action de justification négative ou aucune action de justification, et
le circuit d'évaluation de trame (11) est prévu pour la production d'une impulsion de commutation qui provoque, en présence d'un octet prédéterminé d'une trame à une entrée du multiplexeur (12), la retransmission d'un mot code à la sortie du multiplexeur (12).

7. Système de transmission selon l'une des revendications 1 à 6, caractérisé en ce que
les générateurs d'adresses d'écriture et de lecture (6, 7) sont prévus pour former des adresses d'écriture et de lecture codées selon un code cyclique, et
le détecteur de phase (8) contient un soustracteur (15) qui est prévu pour la réception d'adresses de lecture et d'écriture et pour la formation d'une séquence de valeurs de phases.

8. Système de transmission selon l'une des revendications 1 à 6, caractérisé en ce que
le signal à synchronisation de trames est un signal STM-1 de la hiérarchie numérique synchrone, et
la zone prédéterminée est le premier octet (1ère colonne) dans la 5ème rangée de la trame STM-1.

9. Circuit d'adaptation (2) pour compenser des variations de fréquence et/ou de phase entre un signal à synchronisation de trames arrivant et un signal à synchronisation de trames partant, caractérisé par
- une mémoire tampon (5) pour mémorisation intermédiaire des données du signal,
- un générateur d'adresses d'écriture (6) qui produit des adresses d'écriture cycliques pour commander l'opération d'écriture dans la mémoire tampon (5),
- un générateur d'adresses de lecture (7) qui produit des adresses de lecture cycliques pour commander l'opération de lecture dans la mémoire tampon (5) et qui est prévu, pendant une zone prédéterminée de chaque trame du signal partant, pour la production au moins doublée d'une adresse de lecture lorsqu'un signal de commande indique une action de justification positive et pour le saut d'au moins une adresse de lecture lorsque le signal de commande indique une action de justification négative,
- un détecteur de phase (8) pour former la différence à partir d'une adresse d'écriture et d'une adresse de lecture et pour produire au moins une valeur de phase pendant chaque trame, et
- un circuit de décision de justification (9) qui est prévu pour produire le signal de commande à partir de la valeur de phase.
